# EUROPEAN PATENT APPLICATION

(11) **EP 4 727 077 A1**
(43) Date of publication of application: **15.04.2026**
(21) Application number: 24206476.4
(22) Date of filing: 14.10.2024
(51) Int. Cl.: H04L 41/0604, H04L 41/069, H04L 41/16, H04L 41/0631, H04L 41/147, H04L 41/5074

(54) **METHODS, COMPUTER PROGRAMS, AND APPARATUSES FOR LABELLING AND FOR SUPPORTING LABELLING OF ALARMS OF A TELECOMMUNICATION SYSTEM AND FOR TRAINING MACHINE LEARNING MODELS**

(71) Applicant: Deutsche Telekom AG, 53113 Bonn (DE)
(72) Inventor: SOBANIA, Alexander, 53757 Sankt Augustin (DE)
(74) Representative: 2SPL Patentanwälte PartG mbB

(57) **Abstract**

Examples relate to methods, computer programs, and apparatuses for labelling and for supporting labelling of alarms of a telecommunication system and for training machine learning models. The method (10) for labeling an alarm from a telecommunication system (400) comprises obtaining (12) alarm information and determining (14) relevant features of the alarm using a machine learning model (44). The method (10) further comprises querying (16) a data base (42) based on the relevant features of the alarm to obtain information about relevant incident or configuration tickets, wherein the data base (42) comprises information about incident and configuration tickets of the telecommunication system (400). The method (10) further comprises labeling (18) the alarm as relevant if relevant incident or configuration tickets are obtained

## Description

### Field

Examples relate to methods, computer programs, and apparatuses for labelling and for supporting labelling of alarms of a telecommunication system and for training machine learning models, more particularly, but not exclusively, to a concept for labeling alarms of a telecommunication system using a vector store of feature vectors of incident and configuration tickets of the telecommunication system.

### Background

Telecommunication systems are complex networks with many components. Telecommunication systems are networks designed for transmitting data, voice, and video signals over long distances, enabling communication between users across the globe. These systems consist of several key components, including transmitters, which convert information into signals; transmission media, such as fiber optics, satellites, or radio waves, which carry the signals; and receivers, which decode the transmitted signals back into usable information. Additionally, telecommunication networks often involve switching systems to route signals efficiently, and protocols to ensure proper data formatting and error correction. These components work together to support a wide range of services like mobile communication, internet access, and broadcasting, forming the backbone of modern global connectivity.

Alarm handling in telecommunication networks is a critical process for maintaining the health and reliability of the network. Alarms are generated by network elements, such as switches, routers, or base stations, to indicate faults or abnormal conditions that could affect service performance. These alarms can range from minor issues like signal degradation to severe faults like equipment failures or connectivity loss. Effective alarm handling involves detecting, categorizing, and prioritizing these alarms based on severity, allowing network operators to respond promptly and mitigate potential disruptions. Alarm management systems often employ automated tools for monitoring and diagnosing issues in real-time, while providing operators with detailed insights for troubleshooting. Proper alarm handling ensures network stability, reduces downtime, and enhances overall service quality for users.

For efficient operation of a telecommunication system, it is important to quickly identify problems. This can be achieved using respective alarms, that can be generated by different sources. One way of determining alarms is using key performance indicators (KPIs), which can be obtained from various network components. KPIs in a telecommunication system are measurable metrics used to evaluate the system's performance, efficiency, and reliability. These indicators help network operators monitor service quality, detect issues, and optimize network functionality. Common KPIs include "network availability", which measures the percentage of time the system is operational; "call setup success rate (CSSR)", which tracks the percentage of successfully connected calls; and "drop call rate (DCR)", which reflects the number of calls that are unintentionally terminated. Other KPIs include "latency", the time delay in data transmission, and "throughput", which measures the volume of data successfully transmitted over the network. These KPIs provide critical insights into customer experience, allowing telecommunication providers to maintain service quality, improve network performance, and make informed decisions on upgrades or troubleshooting.

For example, KPI values may change over the time of day, depending on the network load. One example-KPI is the number of successful calls within a given time frame. To detect problems often thresholds are used to generate an alarm if the respective threshold is exceeded or fallen blow. For example, if the number of successful calls falls below five, an alarm is generated.

### Summary

It is a finding of the present disclosure that algorithms can be used to detect anomalies in a telecommunication system. Such algorithms are trained with a large amount of data obtained in the past. The algorithms then generate alarms if an abnormal behavior is detected. This leads to a high number of alarms, which are then evaluated by domain experts. The experts can then decide whether an alarm is relevant or not and even provide their reasoning. This process is also referred to as labeling the alarm. After a number of iterations data can be used to improve the algorithm to better detect actually relevant anomalies in the telecommunication system. Labeling is time consuming. It is a finding of the present disclosure that the process of labelling can be supported by further automation. A possibility to better distinguish relevant and irrelevant anomalies is to evaluate alarms against incident and configuration tickets from the telecommunication system. The tickets may use free text, which might not be structured well, which makes it more difficult to relate them to an anomaly or alarm. Examples of the present disclosure therefore use machine learning to obtain relevant features of incident and configuration tickets and store these in a data base, e.g. obtain feature vectors that are stored in a vector store. Examples may then use a similarity search or query to find relevant related problems. In case relevant related problems are found, according labeling can be carried out. In case no relevant related problems are found the alarm can be labeled as irrelevant. This process can be used to improve the above algorithm as the number of irrelevant alarms for a domain expert to check can be reduced, theoretically, only relevant alarms are presented to the domain expert. After a supervised learning with the labeled data, ideally, in the future only relevant alarms will be presented.

Examples provide a method for labeling an alarm from a telecommunication system. The method comprises obtaining alarm information and determining relevant features of the alarm using a machine learning model. The method further comprises querying a data base based on the relevant features of the alarm using a machine learning model to obtain information about relevant incident or configuration tickets. The data base comprises information about incident and configuration tickets of the telecommunication system and labeling the alarm as relevant if relevant incident or configuration tickets are obtained. Extracting relevant features from the alarm allows finding similar or related incident or configuration tickets in the data base. Therefore, examples may enable an efficient labeling. In further examples the method may further comprise labeling the alarm as irrelevant if no relevant incident or configuration tickets are obtained.

For example, at least one relevant feature of the alarm is a time, when the alarm occurred. Other examples are the name of the node at which the alarm occurred or the location, where the alarm occurred. The querying may be based on a time period, which includes the time, when the alarm occurred. Therefore, a time correlation of the alarm and the tickets may be used for efficient labeling. The data base may be a feature vector store, and the relevant features of the alarm may be a feature vector. This may enable an efficient query as it enables efficient similarity detection of feature vectors.

In further examples the method may comprise receiving, via an interface, an expert indication about the correctness of the labeling and training the machine learning model based on the expert indication. That way, the machine learning model may be further trained based on expert opinions or indications.

The machine learning model may be a large language model, LLM, which is used to determine relevant features of the alarms for querying the data base for incident or configuration tickets related or similar to the alarm. Examples may enable an efficient labeling using an LLM to determine feature vectors of alarms comparable to feature vectors of the data base / vector store. In examples, the alarm may indicate an anomaly in the telecommunication system. For example, such anomaly may require counter measures such as different load distribution, hardware replacement, re-configuration, etc.

Examples also provide a method for generating a data base for supporting labelling alarms from a telecommunication system. The method comprises obtaining information about incident tickets and configuration tickets of the telecommunication system and extracting relevant features of the incident tickets and the configuration tickets using a machine learning model. The method further comprises storing the relevant features in the data base. Examples provide an efficient generation of a data base for feature matching between alarm and incident and/or configuration tickets. In further examples the extracting of relevant features obtains a feature vector of the incident and configuration tickets, and the data base comprises a feature vector store. Using feature vectors and a feature vector store further contributes to efficient storage and later feature similarity detection. Furthermore, the method may comprise storing the incident tickets and the configuration tickets together with the relevant features in the data base. Therewith, the original information on the tickets can be maintained for further use.

Examples also provide a method for training a machine learning model. The method comprises generating training data with a plurality of sets of incident tickets and configuration tickets and information about relevant features of the incident and configuration tickets related to relevant and irrelevant alarms of a telecommunication system. The method further comprises training the machine learning model with the training data. Examples therewith provide a training for a machine learning model that enables the extraction of relevant features of incident and configuration tickets.

Examples also provide another method for training a machine learning model. The method comprises generating training data with a plurality of sets of alarms occurring in a telecommunication system and information about relevant features of the alarms. The method further comprises training the machine learning model with the training data. Examples therewith provide a training for a machine learning model that enables the extraction of relevant features of alarms of a telecommunication system. For example, the machine learning models described herein can be LLMs that provide efficient means for extracting relevant features of un-structured text.

For example, the relevant features of the alarms and/or of the incident and configuration tickets are feature vectors and are stored in a feature vector store.

Examples also provide a computer program having a program code for performing one of the methods described herein, when the computer program is executed on a computer, a processor, or a programmable hardware component.

Another example is an apparatus for supporting labelling in a telecommunication system. The apparatus comprises one or more interfaces configured to communicate with the telecommunication system. The apparatus further comprises one or more processing devices configured to perform one of the methods described herein.

A telecommunication system is another example comprising an example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for labeling an alarm from a telecommunication system;
Fig. 2 shows a block diagram of an example of a method for generating a data base for supporting labelling alarms from a telecommunication system;
Fig. 3 illustrates a block diagram of an example of an apparatus for supporting labelling in a telecommunication system; and
Fig. 4 depicts another block diagram of an example of an automated labeling method in a telecommunication system.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

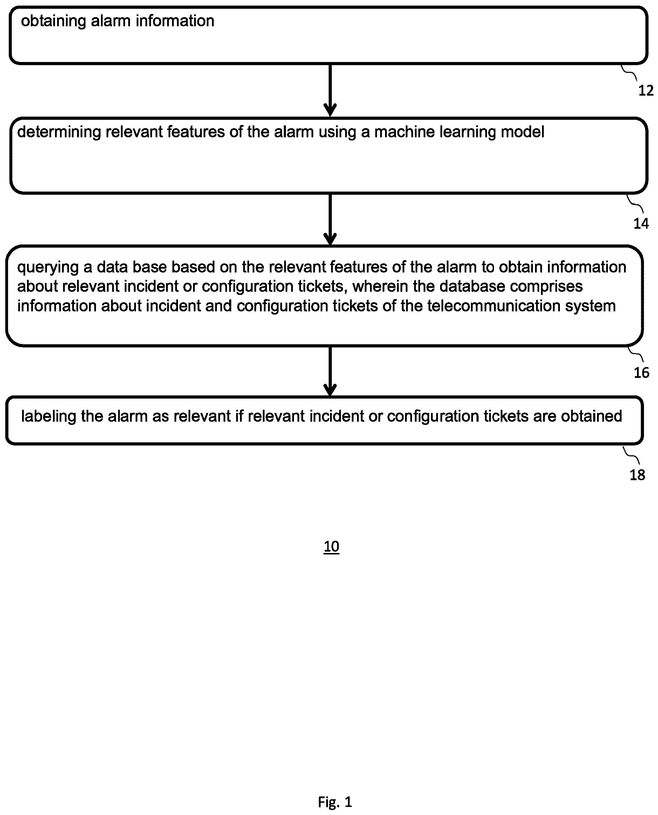

Fig. 1 shows a block diagram of an example of a method 10 for labeling an alarm from a telecommunication system. The method 10 comprises obtaining 12 alarm information and determining 14 relevant features of the alarm using a machine learning model. The method further comprises querying 16 a data base based on the relevant features of the alarm to obtain information about relevant incident or configuration tickets. The data base comprises information about incident and configuration tickets of the telecommunication system. The method 10 further comprises labeling 18 the alarm as relevant if relevant incident or configuration tickets are obtained. The method 10 may further comprise labeling the alarm as irrelevant if no relevant incident or configuration tickets are obtained.

Alarms in telecommunication systems play a critical role in monitoring the health and performance of networks. These systems generate alarms to signal faults, anomalies, or performance degradations that may affect the quality of service or lead to network outages. Alarms can be triggered by a variety of issues, such as hardware failures, software malfunctions, power interruptions, or abnormal traffic patterns. They are typically categorized by severity, ranging from minor warnings to major or critical alarms that require immediate attention to prevent system failures or service disruptions. Alarm management systems are used to aggregate, filter, and prioritize these alerts, enabling network operators to quickly identify and address the most urgent issues. Effective alarm management helps ensure network reliability, maintain service level agreements (SLAs), and minimize downtime, which is essential for maintaining the quality and continuity of communication services.

In telecommunication systems, alarms have several relevant features that make them crucial for efficient network management and fault resolution. One key feature is "severity level", which classifies alarms based on their impact on network operations, ranging from informational alerts to critical failures requiring immediate action. "Timestamping" is another essential feature, as it records the exact time an alarm is triggered, allowing operators to track the sequence of events and correlate issues with network activities. "Location identification" helps pinpoint the specific device, node, or network segment affected, enabling faster troubleshooting and repair. Alarms also have "acknowledgment and escalation mechanisms", ensuring that once an alarm is detected, it is recognized and addressed by the appropriate personnel or systems. Additionally, "correlation and filtering" features reduce alarm noise by identifying patterns and grouping related alarms, which helps avoid information overload and ensures that network operators focus on the most critical issues. These features collectively enhance the ability of telecom operators to maintain network stability and high-quality service delivery. In examples machine learning can be used extract or determine the relevant features of an alarm. The machine learning model may be to handle text, which may be unstructured, and find or extract the relevant features from the text. For example, a large language model (LLM) may be used. As will be further detailed in the sequel, machine learning can also be used to extract relevant features from incident and configuration tickets, which can then be stored for comparison or similarity detection in a data base. For example, at least one relevant feature of the alarm is a time, when the alarm occurred, and the querying 16 may be based on a time period, which includes the time, when the alarm occurred. The alarm may indicate an anomaly in the telecommunication system. Other relevant features can be the source address or location from which the alarm came, as well as the type, e.g. thermal overload, processing overload, etc.

Anomalies in a telecommunication system refer to unexpected or abnormal behaviors in the network that deviate from typical patterns and may indicate potential issues or failures. These anomalies can manifest in various forms, such as sudden spikes in data traffic, abnormal signal loss, dropped calls, degraded voice quality, or unusual latency in data transmission. They may result from hardware malfunctions, software bugs, security breaches, or external factors like interference or environmental disruptions. Detecting anomalies is critical because they can serve as early warning signs of larger problems that could lead to service outages or performance degradation. Advanced techniques such as machine learning and anomaly detection algorithms are often employed to monitor network activity in real-time, identifying deviations from the norm that require further investigation. Efficient anomaly detection and handling are essential for maintaining the reliability and performance of telecommunication systems, minimizing disruptions and improving customer experience.

Incident tickets in a telecommunication system are formal records created when an issue or fault is detected within the network, requiring attention and resolution. These tickets serve as a means to document, track, and manage problems that affect service quality, such as equipment failures, network congestion, or service outages. Each incident ticket typically includes detailed information about the problem, such as the nature of the fault, its location, severity level, and time of occurrence. Incident management teams use these tickets to prioritize issues based on their impact on network performance and customer experience, ensuring that critical problems are addressed promptly. The resolution process for each ticket is tracked through various stages, from initial detection to troubleshooting and final resolution. Proper management of incident tickets ensures minimal service disruptions, faster recovery times, and continuous improvement in network reliability.

Configuration tickets in a telecommunication system are records created to track and manage changes made to the network's configuration settings, such as hardware adjustments, software updates, or parameter modifications. These tickets are part of a structured process aimed at ensuring that any changes to the network infrastructure are planned, approved, and executed in a controlled manner, minimizing the risk of unintended disruptions. Configuration tickets typically include details such as the type of change, the reason for the modification, the affected network elements, and the expected impact on the system's performance. By documenting each step, these tickets provide a clear audit trail and allow network operators to review the history of changes for troubleshooting or compliance purposes. Effective management of configuration tickets ensures that updates or upgrades are properly implemented, improves network performance, and maintains overall service quality and security.

Configuration and/or incident tickets (also referred to as "tickets" herein) are vital tools in telecommunication systems for managing network changes and addressing faults. Both types of tickets share several relevant features, including detailed documentation of the issue or change, the assignment of responsibility to specific personnel, and a structured workflow for resolution or implementation. Configuration tickets focus on planned changes, such as hardware or software upgrades, while incident tickets deal with unplanned disruptions like equipment failures or service outages. Both types of tickets require categorization and prioritization based on the severity of the issue or the potential impact of the change. Additionally, they both include status tracking, with each ticket moving through various stages - such as "open," "in progress," or "resolved"-to ensure accountability and transparency. The history logged in these tickets is crucial for troubleshooting future issues, ensuring compliance with service-level agreements (SLAs), and maintaining network stability by allowing operators to review past actions and decisions.

In line with the above, the labeling 18 of an alarm may hence be based on incident and/or configuration tickets that relate to the same or similar problem as an alarm. To do so, a data base is queried to find similar features between the alarm and the tickets. For the similarity search a correlation analysis or a threshold detection for a similarity can be carried out. This is enabled by using similar formats of the relevant features extracted from the alarms and the tickets using the machine learning model.

Examples of the above method 10 may make the labeling process easier, since it is desirable to make this process as automated as possible. However, domain expertise cannot be easily replaced. One way to separate the relevant and irrelevant anomalies is to compare them with the tickets from the network. However, as these are provided with a lot of free text, it is very difficult to assign them to specific anomalies. Some examples store the incident and configuration tickets in a vector store and search for "related" problems to an anomaly using an LLM. If relevant incidents and configurations are found in the period of the anomaly, the anomaly can be labeled as relevant. If no incidents or configuration changes are found, the anomalies are marked as irrelevant. This can be used to improve the algorithm so that the domain expert has no effort with labeling and only receives relevant anomalies as alerts from the outset.

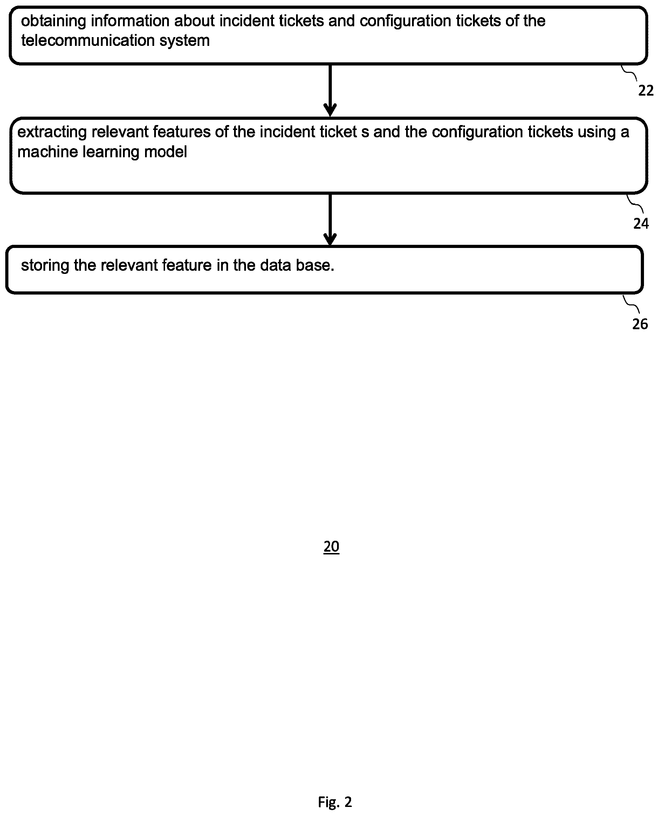

Fig. 2 shows a block diagram of an example of a method 20 for generating a data base for supporting labelling alarms from a telecommunication system. The method 20 comprises obtaining 22 information about incident tickets and configuration tickets of the telecommunication system. The method further comprises extracting 24 relevant features of the incident tickets and the configuration tickets using a machine learning model. In some examples the machine learning model can be same machine learning model as described above for determining 14 the relevant features of the alarm. In other examples different machine learning models can be used in steps 14 and 24. As further shown in Fig. 2 the method 20 further comprises storing 26 the relevant feature in the data base.

In principle, any kind of data base may be used in examples to store the relevant features of the tickets. In a telecommunication system, various types of data bases can be used to store and manage the relevant features of configuration and incident tickets, ensuring efficient tracking and retrieval of information. "Relational data bases", such as MySQL or PostgreSQL, are commonly used due to their structured nature, allowing for the organization of ticket data into tables with defined relationships. This makes it easy to query and generate reports on ticket status, priorities, and resolution times. "NoSQL data bases", like MongoDB or Cassandra, are useful for handling large volumes of unstructured or semi-structured data, offering greater flexibility and scalability for storing complex ticket information with varying fields and formats. "Graph data bases", such as Neo4j, can also be employed to model the intricate relationships between different network components and incidents, enabling quick identification of patterns or correlations that could aid in problem resolution. Cloud-based data bases provide the advantage of scalability, accessibility, and reduced infrastructure management, making them ideal for large, distributed telecommunication networks. Each data base type offers unique strengths depending on the specific requirements for data structure, scalability, and querying within the telecommunication system.

In some examples the extracting 24 of the relevant features obtains a feature vector of the incident and configuration tickets and the data base comprises a feature vector store. A feature vector is a mathematical representation of an object or entity in the form of an array or list of numerical values, where each value corresponds to a specific attribute or characteristic of the object. In the context of machine learning, data analysis, or pattern recognition, feature vectors serve as the input to algorithms that learn patterns or make predictions. Each element of the vector represents a different feature, such as the relevant features of the tickets or alarms, e.g. signal strength, frequency, and noise level in the telecommunication system. Feature vectors are essential because they translate complex, real-world data into a standardized numerical format that models can process. The quality and relevance of the features in the vector directly impact the performance of the algorithm, making feature selection and engineering key steps in the development of robust models.

A feature vector store is a specialized data base or storage system designed to store, manage, and retrieve feature vectors, which are essential components in machine learning and data analytics work-flows. Feature vector stores are optimized for high-performance querying, allowing fast access to feature vectors when needed for training, validation, or inference by machine learning models. These stores typically provide version control, ensuring that feature vectors used in different stages of the machine learning lifecycle can be accurately tracked and reproduced. Additionally, they often integrate with pipelines for feature extraction and transformation, making it easier to manage the feature engineering process at scale. By centralizing the storage of feature vectors, these systems enable efficient reuse, reduce redundancy, and facilitate collaboration between data scientists and engineers. Feature vector stores are essential in environments where large-scale machine learning operations require consistency and scalability, such as in telecommunication systems, recommendation engines, or predictive analytics. In further examples, the method 20 further comprises storing the incident tickets and the configuration tickets together with the relevant features in the data base. That way, the original information of a ticket can be made available, e.g. for further training purposes of the machine learning model or for later expert review. Hence, in some examples the data base is a feature vector store and the relevant features of the alarm are a feature vector. The relevant features of the alarms and/or of the incident and configuration tickets are feature vectors and are stored in a feature vector store at least in some examples.

Examples also provide a method for training a machine learning model. This training method comprises generating training data with a plurality of sets of incident tickets and configuration tickets and information about relevant features of the incident and configuration tickets related to relevant and irrelevant alarms of a telecommunication system. The training method further comprises training the machine learning model with the training data. The trained machine learning model can then be used to extract the relevant features/feature vectors from the tickets to generate the data base as described above.

Examples also provide another training method for training a machine learning model. This training method comprises generating training data with a plurality of sets of alarms occurring in a telecommunication system and information about relevant features of the alarms. The training method further comprises training the machine learning model with the training data.

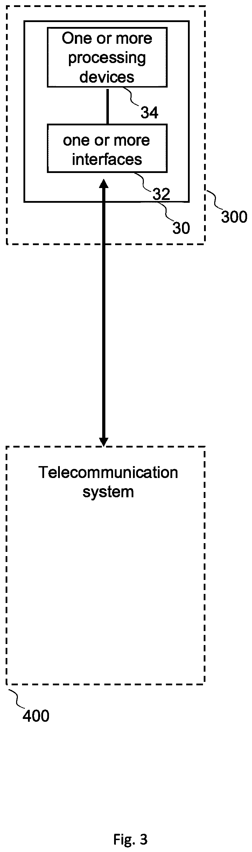

Fig. 3 illustrates a block diagram of an example of an apparatus 30 for supporting labelling in a telecommunication system 400. The apparatus 30 for supporting labelling in the telecommunication system 400 comprises one or more interfaces 32, which are configured to communicate with/within the telecommunication system 400. The one or more interfaces 32 are coupled to one or more processing devices 34, which are configured to perform one of the methods (training methods, labeling, data base generation) described herein.

As illustrated in Fig. 3, the respective one or more processing devices 34 are coupled to the one or more interfaces 32. The one or more interfaces 32 may correspond and/or be associated to one or more inputs and/or outputs for receiving and/or transmitting information, which may be in digital (bit) values according to a specified code or protocol, within a module, between modules or between modules of different entities. For example, an interface 32 may comprise interface circuitry configured to receive and/or transmit information. In examples an interface 32 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API; etc., as well as any abstraction thereof, especially based on virtualization, containerization, service abstraction, proxying, load-balancing, network address translation (NAT), cloud computing and/or serverless computing; which allows providing or obtaining a signal or information. An interface 32 may be configured to communicate (transmit, receive, or both) in a wireless or wireline manner and it may be configured to communicate, i.e., transmit and/or receive signals, information with further internal or external components. The one or more interfaces 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples.

The one or more processing devices 34 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc. and/or an abstraction thereof.

Another example is a network node, such as a server, a computer, or a router, 300 comprising an example of the apparatus 30. The network node 300 is shown in dashed lines as it is optional from the perspective of the apparatus 30. In Fig. 3 the apparatus 30 is shown outside the telecommunication system 400, which is only an example. The apparatus 30 or the network 300, respectively may as well be comprised by the telecommunication system 400. Yet another example is therefore a telecommunication system 400 comprising an example of the apparatus 30.

The telecommunication system 400 may be of various types. The types of telecommunication system 400 are designed to serve specific communication needs and technologies. Fixed-line telecommunication systems are traditional systems that use copper or fiber-optic cables to transmit voice and data, commonly used in landline phone services and broadband internet. Mobile telecommunication systems operate through wireless networks, enabling communication through devices such as smartphones via cellular networks like 4G (4^{th} generation), 5G, and beyond. Satellite communication systems use satellites in orbit to transmit signals over vast distances, providing coverage in remote areas where terrestrial systems are unavailable. Radio and television broadcast systems deliver audio and video signals to large audiences using radio frequencies, typically for entertainment or public service. VoIP (Voice over Internet Protocol) systems use the internet to transmit voice calls, offering flexibility and reduced costs compared to traditional phone systems. Additionally, optical communication systems leverage light waves transmitted through fiber optics to offer high-speed data transmission over long distances with minimal signal loss. Each type of telecommunication system serves different purposes and industries, contributing to the overall infrastructure of global connectivity.

In further examples the method 10 may further comprise receiving, via an interface, an expert indication about the correctness of the labeling and training the machine learning model based on the expert indication. Hence, at least in some examples an alarm labelled as relevant will be further processed, e.g. an expert may decide on any measure to be taken. Such measures may result in further incident and/or configuration tickets. Furthermore, an expert may determine that the alarm was not relevant and then relabel the alarm. This information may also be used to further train machine learning model. For this purpose, an information may be communicated back to the algorithm, the apparatus carrying out the method 10, respectively.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

In examples several types of machine learning models are conceivable. Supervised learning models are trained on labeled data, where the input data is paired with known outputs. These models, such as linear regression, decision trees, and support vector machines (SVMs), are used for tasks like classification and regression, predicting outcomes based on past examples. Unsupervised learning models work with unlabeled data and aim to find hidden patterns or relationships. Examples include k-means clustering and principal component analysis (PCA), which are used for grouping data and dimensionality reduction, respectively. Semi-supervised learning combines both labeled and unlabeled data to improve learning when labeled data is scarce. Reinforcement learning models learn by interacting with an environment, receiving rewards or penalties for actions taken; they are often used in areas like robotics and game AI, with Q-learning being a popular algorithm. Finally, deep learning models, which are a subset of machine learning, utilize artificial neural networks with many layers to automatically learn complex patterns from large datasets, such as in image recognition or natural language processing. Each type of model is suited to different applications depending on the nature of the data and the problem at hand.

Large language models (LLMs) are a type of machine learning model designed to understand and generate human language by processing vast amounts of text data, as it is available from the incident and configuration tickets. There are several types of large language models, each with unique architectures and applications. Transformers, like GPT (Generative Pre-trained Transformers), are among the most common LLMs. They use self-attention mechanisms to process text efficiently, making them highly effective for tasks such as text generation, summarization, and translation. BERT (Bidirectional Encoder Representations from Transformers) is another popular model that excels at understanding the context of words in a sentence by reading text bidirectionally, making it ideal for tasks like question answering and sentiment analysis. T5 (Text-to-Text Transfer Transformer) frames all tasks as text-to-text problems, allowing it to handle tasks like text summarization, classification, and translation using the same underlying model. Another type is LLMs trained with reinforcement learning, such as InstructGPT, which can better align their outputs with human preferences by learning from feedback. While most LLMs are trained on general-purpose tasks, some are fine-tuned for domain-specific applications, such as legal, medical, or technical language, making them highly versatile tools for a wide range of natural language processing (NLP) tasks. In examples, the machine learning model may be a large language model, LLM, which is used to determine relevant features of the alarm for querying the data base for incident or configuration tickets related to or similar to the alarm.

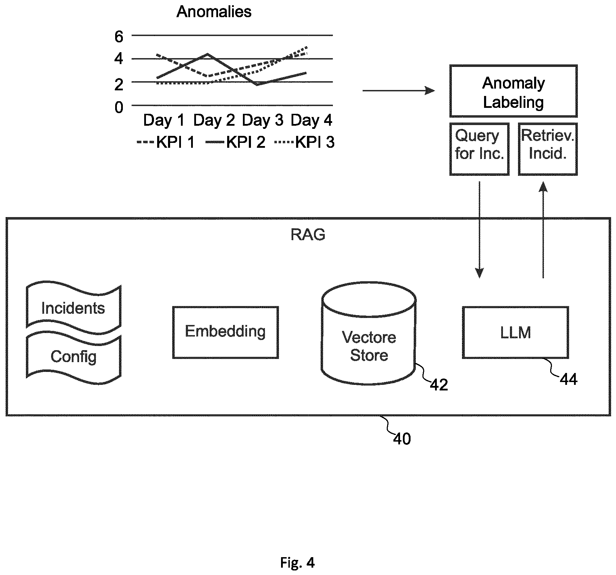

Fig. 4 depicts another block diagram of an example of an automated labeling method in a telecommunication system. Fig. 4 illustrates an example of an apparatus 40 for supporting labeling of alarms. The apparatus 40 is implemented as RAG (Retrieval Augmented Generation) system. RAG is a machine learning model architecture that combines the two key processes retrieval and generation to enhance the performance of natural language processing (NLP) systems, particularly in applications like telecommunications. Retrieval refers to the process of accessing external databases, documents, or knowledge sources to fetch relevant information. For example, a telecom provider may have a massive collection of documents, user guides, troubleshooting logs, and other forms of data. When a complex query is asked, the RAG system may first retrieve the most relevant information from this external knowledge base, i.e. vector store 42 in this example.

After retrieving the relevant data, the next step is generation. A natural language generation (NLG) model (usually a large language model like GPT) processes the retrieved information and generates a coherent, natural-sounding response tailored to the query. Telecom operators use RAG models to assist technicians by retrieving information from network databases and guiding them through troubleshooting procedures. In summary, RAG may enhance the ability of NLP systems in telecommunications to provide accurate and conversational responses by first retrieving the best information from a knowledge base and then generating a helpful and structured reply.

As shown in Fig. 4 the anomaly/alarm labeling is based on KPI monitoring. An example visualization of KPIs is shown at the top left of Fig. 4, which shows an anomaly chart with the development of three KPIs, KPI 1, KPI 2, and KPI 3 over several days.

The RAG 40 in Fig. 4 comprises a vector store 42 storing feature vectors, which were embedded from incident and configuration tickets using an LLM. The RAG 40 further comprises an LLM 44, which can the same or a different LLM used for the embedding of the relevant features of the tickets. The LLM 44 is used for labeling anomalies/alarm. As shown in Fig. 4 it may query the vector store for similarities of the relevant features of an alarm and return corresponding incidents retrieved from the data base 42. For example, the retrieved incidents may be incidents that fulfill a certain similarity criterion. For example, the feature vector of the alarm is correlated with feature vectors of the vector store 42, from which feature vectors are retrieved that fulfill the similarity criterion, which may be a similarity threshold. For example, if a correlation factor of 0.5, 0.6, 0.7, 0.8, 0.9, 0.95 is determined between a feature vector of the alarm and a related feature vector of the vector store, and the feature vector of from the vector store is labeled relevant, the alarm/anomaly is also labeled relevant.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for labeling an alarm from a telecommunication system (400), the method (10) comprising
obtaining (12) alarm information;
determining (14) relevant features of the alarm using a machine learning model (44);
querying (16) a data base (42) based on the relevant features of the alarm to obtain information about relevant incident or configuration tickets, wherein the data base (42) comprises information about incident and configuration tickets of the telecommunication system (400); and
labeling (18) the alarm as relevant if relevant incident or configuration tickets are obtained.

2. The method (10) of claim 1, further comprising labeling the alarm as irrelevant if no relevant incident or configuration tickets are obtained.

3. The method (10) of one of the claims 1 or 2, wherein at least one relevant feature of the alarm is a time, when the alarm occurred, and wherein the querying is based on a time period, which includes the time, when the alarm occurred.

4. The method (10) of one of the claims 1 to 3, wherein the data base (42) is a feature vector store and wherein the relevant features of the alarm are a feature vector.

5. The method (10) of one of the claims 1 to 4, further comprising receiving, via an interface, an expert indication about the correctness of the labeling and training the machine learning model based on the expert indication.

6. The method (10) of one of the claims 1 to 5, wherein the machine learning model (44) is a large language model, LLM, which is used to determine relevant features of the alarm for querying the data base (44) for incident or configuration tickets related or similar to the alarm.

7. The method (10) of one of the claims 1 to 6, wherein the alarm indicates an anomaly in the telecommunication system (400).

8. A method (20) for generating a data base (42) for supporting labelling alarms from a telecommunication system (400), the method (20) comprising
obtaining (22) information about incident tickets and configuration tickets of the telecommunication system (400);
extracting (24) relevant features of the incident tickets and the configuration tickets using a machine learning model; and
storing (26) the relevant feature in the data base (42).

9. The method (20) of claim 8, wherein the extracting (24) of the relevant features obtains a feature vector of the incident and configuration tickets and wherein the data base (42) comprises a feature vector store.

10. The method (20) of one of the claims 8 or 9, further comprising storing the incident tickets and the configuration tickets together with the relevant features in the data base (42).

11. A method for training a machine learning model (44), the method comprising
generating training data with a plurality of sets of incident tickets and configuration tickets and information about relevant features of the incident and configuration tickets related to relevant and irrelevant alarms of a telecommunication system (400); and
training the machine learning model with the training data.

12. A method for training a machine learning model (42), the method comprising
generating training data with a plurality of sets of alarms occurring in a telecommunication system and information about relevant features of the alarms; and
training the machine learning model with the training data.

13. The method of one of the claims 11 or 12, wherein the relevant features of the alarms and/or of the incident and configuration tickets are feature vectors and are stored in a feature vector store.

14. A computer program having a program code for performing one of the methods of claims 1 to 13, when the computer program is executed on a computer, a processor, or a programmable hardware component.

15. An apparatus (30) for supporting labelling in a telecommunication system (400), the apparatus comprising
one or more interfaces (32) configured to communicate with the telecommunication system; and
one or more processing devices (34) configured to perform one of the methods of claims 1 to 13.

## Amended claims

### Amended claims in accordance with Rule 137(2) EPC.

1. A method (10) for labeling an alarm from a telecommunication system (400), the method (10) comprising
obtaining (12) alarm information;
determining (14) relevant features of the alarm using a machine learning model (44), wherein the machine learning model (44) is a large language model, LLM, which is used to determine relevant features of the alarm for querying the database (42) for incident or configuration tickets related or similar to the alarm;
querying (16) a data base (42) based on the relevant features of the alarm to obtain information about relevant incident or configuration tickets, wherein the data base (42) comprises information about incident and configuration tickets of the telecommunication system (400); and
automatically labeling (18) the alarm as relevant if relevant incident or configuration tickets are obtained, wherein the database (42) is a feature vector store and wherein the relevant features of the alarm are a feature vector.

2. The method (10) of claim 1, further comprising labeling the alarm as irrelevant if no relevant incident or configuration tickets are obtained.

3. The method (10) of one of the claims 1 or 2, wherein at least one relevant feature of the alarm is a time, when the alarm occurred, and wherein the querying is based on a time period, which includes the time, when the alarm occurred.

4. The method (10) of one of the claims 1 to 3, further comprising receiving, via an interface, an expert indication about the correctness of the labeling and training the machine learning model based on the expert indication.

5. The method (10) of one of the claims 1 to 4, wherein the alarm indicates an anomaly in the telecommunication system (400).

6. A method (20) for generating a data base (42) for supporting labelling alarms from a telecommunication system (400), the method (20) comprising
obtaining (22) information about incident tickets and configuration tickets of the telecommunication system (400);
extracting (24) relevant features of the incident tickets and the configuration tickets using a machine learning model; and
storing (26) the relevant feature in the data base (42), wherein the extracting (24) of the relevant features obtains a feature vector of the incident and configuration tickets and wherein the data base (42) comprises a feature vector store, and further comprising storing the incident tickets and the configuration tickets together with the relevant features in the database (42).

7. A method for training a machine learning model (44), the method comprising
generating training data with a plurality of sets of incident tickets and configuration tickets and information about relevant features of the incident and configuration tickets related to relevant and irrelevant alarms of a telecommunication system (400); and
training the machine learning model with the training data, wherein the relevant features of the incident and configuration tickets are feature vectors and are stored in a feature vector store.

8. A method for training a machine learning model (42), the method comprising
generating training data with a plurality of sets of alarms occurring in a telecommunication system and information about relevant features of the alarms; and
training the machine learning model with the training data, wherein the relevant features of the alarms are feature vectors and are stored in a feature vector store.

9. A computer program having a program code for performing one of the methods of claims 1 to 8, when the computer program is executed on a computer, a processor, or a programmable hardware component.

10. An apparatus (30) for supporting labelling in a telecommunication system (400), the apparatus comprising
one or more interfaces (32) configured to communicate with the telecommunication system; and
one or more processing devices (34) configured to perform one of the methods of claims 1 to 8.
